# FASCICULE DE BREVET EUROPEEN

(11) **EP 4 230 332 B1**
(45) Date de publication et mention de la délivrance du brevet: **19.06.2024**
(21) Numéro de dépôt: 23172355.2
(22) Date de dépôt: 16.04.2020
(51) Int. Cl.: B23C 5/10, B23C 5/28

(54) **OUTIL DE COUPE À LUBRIFICATION INTÉGRÉE**
SCHNEIDWERKZEUG MIT INTEGRIERTER SCHMIERUNG
CUTTING TOOL WITH INTEGRATED LUBRICATION

(30) Priorité: 02.05.2019 CH 5842019; 02.05.2019 CH 5832019
(43) Date de publication de la demande: 23.08.2023
(62) Demande divisionnaire de: 20720410.8
(73) Titulaire: DIXI Polytool SA, 2400 Le Locle (CH)
(72) Inventeur: CHAILLET, Eric, 25130 Villers-le-lac (FR)
(74) Mandataire: BOVARD AG

(56) Documents cités:
- DE-A1-102010 002 513
- DE-A1-102013 205 026
- DE-U1-202012 103 752
- GB-A- 1 120 732
- JP-A- 2005 014 115
- JP-A- 2005 034 976
- US-A1- 2012 093 592

## Description

### Domaine technique de l'invention

La présente invention se rapporte au domaine des outils pour machines-outils. La présente invention se rapporte en particulier au domaine des outils de coupe pour machines-outils, plus précisément au domaine des outils de coupe à lubrification intégrée et à un outil de coupe selon le préambule de la revendication 1. La présente invention se rapporte selon un premier aspect à un outil de coupe à lubrification intégrée possédant une bague d'arrosage directionnelle permettant premièrement de guider le lubrifiant au plus proche de la partie coupante de l'outil et deuxièmement d'augmenter la vitesse de sortie du lubrifiant.

### État de la technique

Le document GB 1120732A montre un outil de coupe selon le préambule de la revendication 1 à lubrification intégrée appelé dresse meule utilisée pour le dressage ou l'avivage d'une meule permettant la rectification de pièces mécaniques en acier. Cet outil comprend un corps d'outil avec un axe central et un diamètre de serrage, une tête d'outil adjacente au corps d'outil en direction de l'axe central et composée d'une zone d'arrosage et d'une partie coupante ayant un diamètre de coupe inférieur au diamètre de serrage, l'outil de coupe comprenant aussi au moins un canal de lubrification qui s'étend à travers le corps d'outil et qui débouche dans un trou d'arrosage situé dans la zone d'arrosage, une bague d'arrosage directionnelle prévue pour se fixer sur une zone de connexion de bague du corps d'outil, la zone de connexion de bague étant adjacente à la zone d'arrosage, la bague directionnelle étant configurée de telle façon qu'elle délimite avec au moins une partie de la zone d'arrosage un espace de répartition.

Dans le domaine de l'usinage de pièces mécaniques, il est usuel d'utiliser des fluides de coupe ou lubrifiants lors de l'usinage de pièces par enlèvement de copeaux. Ces lubrifiants permettent d'assurer le refroidissement de l'outil, la diminution du coefficient de frottement, l'évacuation des copeaux, l'amélioration de l'état de surface, et l'augmentation de la durée de vie des d'outils.

Les lubrifiants peuvent être acheminés de nombreuses façons à proximité des tranchants des outils. La méthode la plus commune est de mener le lubrifiant à travers un ou plusieurs tuyaux situés autour de la zone de coupe. Ainsi, à l'heure actuelle, la majorité des machines-outils, des processus d'usinage et des outils de coupe utilisent un arrosage externe.

Un arrosage externe a plusieurs inconvénients qui deviennent particulièrement gênant dans le cas d'outils de petites tailles. Premièrement, un arrosage externe résulte souvent en un manque de lubrification et de refroidissement ce qui engendre une augmentation de la température de coupe dans la zone de frottement entre le tranchant des outils, par exemple des fraises, et la pièce usinée. Cette augmentation de température diminue les propriétés mécaniques du matériau de l'outil, par exemple du carbure de tungstène, et réduit de manière drastique la durée de vie des outils. Deuxièmement, un arrosage externe ne permet pas une évacuation optimale des copeaux ce qui a pour conséquence qu'il est fréquent que les tranchants des outils recoupent plusieurs fois les mêmes copeaux. Cela se traduit par des états de surfaces médiocres, voire des casses d'outils intempestives. Troisièmement, les outils de très petites tailles, appelés aussi micro-outils, s'utilisent dans des gammes de rotations élevées de 20'000 à 80'000 tours par minutes. A ces vitesses de rotation le lubrifiant émanant d'un arrosage externe n'atteint que partiellement la zone de coupe, il est repoussé par l'anneau d'air en giration autour de l'outil.

Il est également connu de l'art antérieur d'utiliser des outils de coupe à lubrification intégrée qui permettent l'acheminement du lubrifiant vers la zone de coupe par l'intermédiaire d'un canal unique de lubrification arrangé dans le corps de l'outil le long de l'axe central de l'outil. Dans ces outils connus, le canal unique de lubrification débouche dans des sorties de lubrification qui se situent aux extrémités des outils ou dans les goujures de ceux-ci. Les sorties de lubrification sont formées en perçant la surface de l'outil de manière orthogonale à l'axe central de l'outil. L'orientation des sorties de lubrification ainsi produites a pour effet que le lubrifiant émanant de ces sorties a tendance à s'éloigner des tranchants de l'outil ce qui résulte en une lubrification non optimale. De plus à l'heure actuelle, des outils à lubrification intégrée avec des sorties dans les goujures ne sont connus que pour des dimensions de coupe supérieures à 6 mm. En effet, pour des outils de moins de 6 mm, il est difficile d'envisager de placer les sorties des canaux de lubrification à l'extrémité ou dans les goujures de l'outil.

Pour des dimensions plus petites, des outils qui comprennent un arrosage périphérique sous forme de canaux de lubrification droits et parallèles à l'axe de l'outil sont connus. Dans de tels outils, les trous de sortie des canaux de lubrification sont placés dans une partie intermédiaire de l'outil qui se situe entre le corps de l'outil et la partie coupante de ce dernier. Malheureusement, la solution d'une lubrification intégrée avec un arrosage périphérique n'est pas complétement satisfaisante. En effet, le lubrifiant n'est pas suffisamment dirigé vers la partie coupant de l'outil ce qui résulte en une lubrification insuffisante. De ce fait, les outils de petites dimensions connus de l'art antérieur rencontrent de nombreux problèmes d'usure et de performances lors des opérations d'usinage telles que le rainurage, l'usinage de poches, l'alésage ou encore le filetage par interpolation.

Cependant, les outils de petites et très petites dimensions sont fréquemment utilisés dans la fabrication des composants de la plupart des microsystèmes. Il existe par conséquent un besoin pour un outil de coupe à lubrification intégrée qui permettent une lubrification suffisante des tranchants de l'outil.

### Résumé de l'invention

Un but de la présente invention est donc de proposer un outil de coupe à lubrification intégrée permettant de surmonter les limitations mentionnées préalablement.

Selon l'invention, ces buts sont atteints grâce à l'objet de la revendication 1. Les aspects plus spécifiques de la présente invention sont décrits dans les revendications dépendantes ainsi que dans la description.

De manière plus spécifique, un but de l'invention est atteint, selon un premier aspect de la présente invention, grâce à un outil de coupe pour l'usinage de pièces mécaniques, comprenant un corps d'outil avec un axe central et un diamètre de serrage, une tête d'outil adjacente au corps d'outil en direction de l'axe central et composée d'une zone d'arrosage et d'une partie coupante ayant un diamètre de coupe inférieur au diamètre de serrage, l'outil de coupe comprenant aussi au moins un canal de lubrification qui s'étend à travers le corps d'outil et qui débouche dans un trou d'arrosage situé dans la zone d'arrosage, caractérisé en ce que l'outil de coupe comprend une bague d'arrosage directionnelle prévue pour se fixer sur une zone de connexion de bague du corps d'outil, la zone de connexion de bague étant adjacente à la zone d'arrosage, et en ce que la bague d'arrosage directionnelle est configurée de telle façon qu'elle délimite avec au moins une partie de la zone d'arrosage un espace de répartition et en ce que la section de l'espace de répartition se réduise en direction de la partie coupante.

Grâce à un outil de coupe selon le premier aspect de la présente invention, il est possible de diriger de manière optimale le lubrifiant en direction de la partie coupante de l'outil et d'atteindre une lubrification parfaite des tranchants de l'outil par les goujures. De plus, à débit de lubrifiant constant, grâce à la bague d'arrosage directionnelle et sur la base du principe de l'effet Venturi, la vitesse de sortie du lubrifiant est augmentée. La vitesse augmentée du lubrifiant favorise l'évacuation des copeaux de la zone de coupe de manière continue, efficace et répétitive. La problématique de recoupe des copeaux coincés créant des états de surface médiocres, fréquents avec les procédés de lubrification externes, est supprimée. D'autre part, le lubrifiant atténue aussi la formation d'arêtes rapportées et contribue à un meilleur état de surface de la pièce produite. De manière générale, la durée de vie de l'outil de coupe s'en trouve augmentée.

L'avantage de ce nouveau principe d'arrosage est considérable puisque des outils de petites dimensions sont largement utilisés dans la fabrication des composants de la plupart des microsystèmes.

Aujourd'hui, la miniaturisation générale de nombreux mécanismes et appareils dans des secteurs industriels tels que médicaux, horlogers, électronique, automobiles, aérospatial sont directement concernés par ces problématiques de micro-usinage.

Un autre avantage est de permettre l'usinage fiable et répétitif avec des outils de dimensions inférieurs à 0.30 mm dans des matériaux à usinabilité très difficiles tels que les titanes, alliages haute température, fibres de carbone, etc.

L'objet de la présente invention apporte de nouvelles perspectives à l'usinage à grande vitesse de rotation. Elle permet d'exploiter les dernières générations de machine outils ayant des broches à très grandes rotations équipées de micro pulvérisation interne à l'air et à l'huile et des premiers systèmes d'arrosage et réfrigération au gaz carbonique.

Dans un premier mode de réalisation préféré de la présente invention, la bague d'arrosage directionnelle couvre partiellement la partie coupante. Ceci permet de diriger et d'accélérer le lubrifiant encore plus efficacement en direction de l'extrémité de la partie coupante de l'outil.

Dans un mode de réalisation préféré suivant, le corps d'outil comprend 2, 3, 4, 5, 6, 8 ou 10 canaux de lubrifications. Cela permet d'augmenter le débit de lubrifiant et d'améliorer la lubrification de la partie coupante.

Dans un autre mode de réalisation préféré, les canaux de lubrifications s'étendent à travers le corps d'outil parallèlement à l'axe central. Un tel mode de réalisation permet de réaliser les canaux de lubrifications de manière particulièrement simple.

Dans un mode de réalisation préféré suivant, les canaux de lubrifications s'étendent à travers le corps d'outil en spirale autour de l'axe central.

Dans un mode de réalisation préféré suivant, la bague d'arrosage directionnelle est amovible. Cela permet de pouvoir échanger la bague d'arrosage directionnelle si celle-ci est endommagée ou si une autre bague possédant une forme différente est plus adaptée à l'utilisation spécifique de l'outil de coupe.

Dans un autre mode de réalisation préféré, la tête d'outil est une tête de fraisage à deux tailles, coupe frontale et coupe au diamètre possédant de une à dix dents coupantes.

Dans un autre mode de réalisation préféré, la tête d'outil est un tourbillonneur ou une fraise à fileter.

Dans un autre mode de réalisation préféré, la tête d'outil est un foret. L'avantage technique est d'empêcher les copeaux longs de s'enrouler sur le corps des forets obligeant les opérateurs à stopper le processus d'usinage.

Dans un autre mode de réalisation préféré, la tête d'outil est un alésoir. Les avantages techniques sont de lubrifier la zone de coupe mais aussi d'empêcher les copeaux longs de s'enrouler sur le corps des alésoirs.

Dans un autre mode de réalisation préféré, le diamètre de coupe est plus petit que 6 mm, avantageusement plus petit que 5 mm, encore plus avantageusement plus petit que 4 mm. Cela permet de réaliser des pièces usinées de haute précision.

Dans un autre mode de réalisation préféré, la tête d'outil et le corps d'outil sont en carbure de tungstène.

Dans un autre mode de réalisation préféré, la bague d'arrosage directionnelle est en carbure de tungstène, en métal ou en matière synthétique.

Dans une illustration ne faisant pas partie de la présente invention, on prévoit un outil de coupe pour l'usinage de pièces mécaniques, comprenant un corps d'outil avec un axe central et un diamètre de serrage, une tête d'outil adjacente au corps d'outil en direction de l'axe central et composée d'une zone intermédiaire et d'une partie coupante ayant un diamètre de coupe inférieur au diamètre de serrage, la zone intermédiaire étant positionnée entre le corps d'outil et la partie coupante et ayant une forme essentiellement en cône tronqué, caractérisé en ce que, l'outil de coupe comprend au moins un premier canal de lubrification et un deuxième canal de lubrification qui s'étendent à travers le corps d'outil, le premier canal de lubrification débouchant dans un premier trou d'arrosage et le deuxième canal de lubrification débouchant dans un deuxième trou d'arrosage, le premier trou d'arrosage et le deuxième trou d'arrosage étant situés dans la partie coupante.

Grâce à un tel outil, il est possible d'assurer une lubrification optimale même pour les petits ou très petits outils de coupes. Le fait que l'outil comprend au moins deux canaux de lubrification permet de garantir que le lubrifiant atteigne la zone de coupe même si un des canaux de lubrification est bouché.

Selon un premier mode de réalisation préféré, le premier trou d'arrosage et le deuxième trou d'arrosage se situent à l'intérieur des rainures spécifiques prévues au fond des goujures de la partie coupante. Le fait que les trous d'arrosage se situent dans les goujures permet de garantir que le lubrifiant atteigne les tranchants de la partie coupante de manière optimale. Ceci est particulièrement avantageux pour les outils de coupe dont la partie coupante est une tête de fraisage.

Dans un mode de réalisation préféré suivant, le premier trou d'arrosage et le deuxième trou d'arrosage se situent dans les faces de coupe frontale de la partie coupante. De cette manière, le lubrifiant est fourni directement à l'extrémité de l'outil de coupe et au plus près des tranchants de la face de coupe frontale. Ceci est particulièrement avantageux lorsque la partie coupante de l'outil de coupe est un perçoir.

Dans un autre mode de réalisation préféré, le premier trou d'arrosage se situe proche d'une face de coupe au diamètre de la partie coupante et le deuxième trou d'arrosage se situe proche d'une autre face de coupe au diamètre de la partie coupante. Grâce à ce mode de réalisation, le lubrifiant est fourni aussi bien à l'extrémité de la partie coupante et sur les tranchants de la coupe au diamètre. Ceci est particulièrement avantageux pour les outils qui sont employés en mode perçage mais aussi en mode fraisage.

Dans un autre mode de réalisation préféré, le premier canal de lubrification et le deuxième canal de lubrification s'étendent à travers le corps d'outil essentiellement de manière parallèle à l'axe central. Grâce à l'orientation des canaux de lubrification de manière parallèle à l'axe central, l'outil de coupe selon la présente invention est particulièrement facile à réaliser.

Dans un mode de réalisation préféré suivant, le premier canal de lubrification et le deuxième canal de lubrification s'étendent à travers le corps d'outil en spirale autour de l'axe central. L'orientation en spirale des canaux de lubrification est particulièrement avantageuse car elle permet que le lubrifiant lorsqu'il sort des canaux de lubrification soit dirigé sur et le long de la partie coupante de l'outil et permet ainsi d'éviter que le lubrifiant ne s'éloigne de la partie coupante. De plus, l'orientation en spirale permet de garantir que le lubrifiant sorte des trous d'arrosage avec une vitesse suffisante qui permet à la fois une lubrification mais aussi une élimination des copeaux optimale.

Dans un autre mode de réalisation préféré, l'hélicité de la spirale du premier canal de lubrification autour de l'axe central et de la spirale du deuxième canal de lubrification autour de l'axe central est la même que l'hélicité des goujures de la partie coupante. Cela permet de prévoir les canaux de lubrification orientés de la même manière que les goujures de la partie coupante. Ceci est avantageux car le lubrifiant peut être ainsi fourni aux goujures de manière optimale.

Dans un autre mode de réalisation préféré, le pas de la spirale du premier canal de lubrification autour de l'axe central et de la spirale du deuxième canal de lubrification autour de l'axe central est le même que le pas des goujures de la partie coupante. Cela permet de s'assurer encore plus que le lubrifiant soit dirigé à l'intérieur des goujures ce qui permet une lubrification optimale de l'outil de coupe.

Dans un mode de réalisation préféré suivant, le premier canal de lubrification et le deuxième canal de lubrification sont orientés de telle que sorte que directement avant de déboucher dans le premier trou d'arrosage, respectivement dans le deuxième trou d'arrosage, les spirales des canaux de lubrification se superposent aux spirales des goujures de la partie coupante. Cela permet de garantir que le lubrifiant soit dirigé dans les goujures et que la composante vectorielle de la vitesse du lubrifiant corresponde à la direction des goujures. Il est ainsi possible d'atteindre la vitesse maximale du lubrifiant dans les goujures.

Dans un mode de réalisation préféré suivant, le corps d'outil comprend un canal de lubrification par goujure de la partie coupante. De par la même, chaque goujure est fournie en lubrifiant et la partie coupante est lubrifiée de manière optimale.

Dans un autre mode de réalisation préféré, la tête d'outil est une tête de fraisage ou une tête d'alésage.

Dans un mode de réalisation préféré suivant, le diamètre de coupe est plus petit que 6 mm, avantageusement plus petit que 5 mm, encore plus avantageusement plus petit que 4 mm.

Dans un mode de réalisation préféré suivant, la tête d'outil et le corps d'outil sont en carbure de tungstène.

### Brève description des dessins

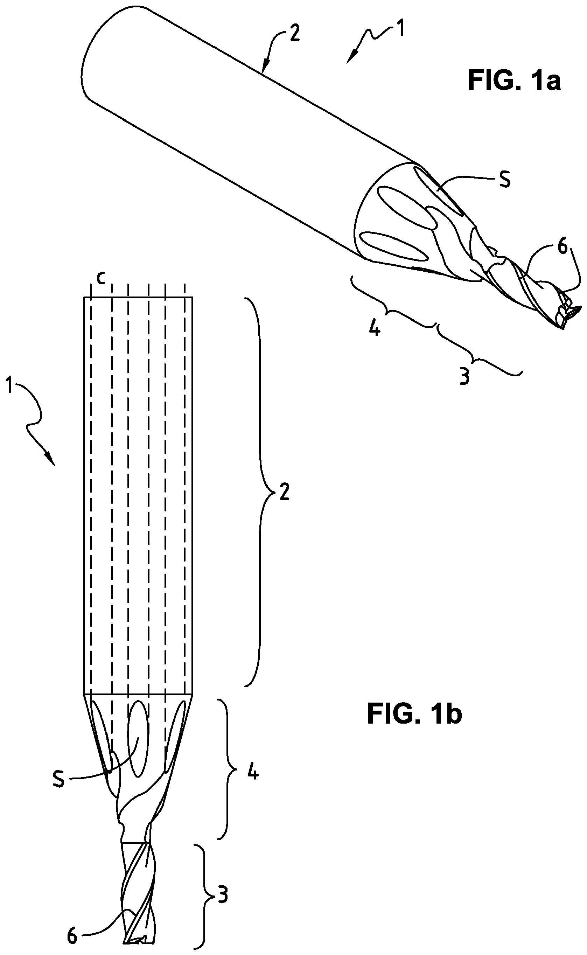

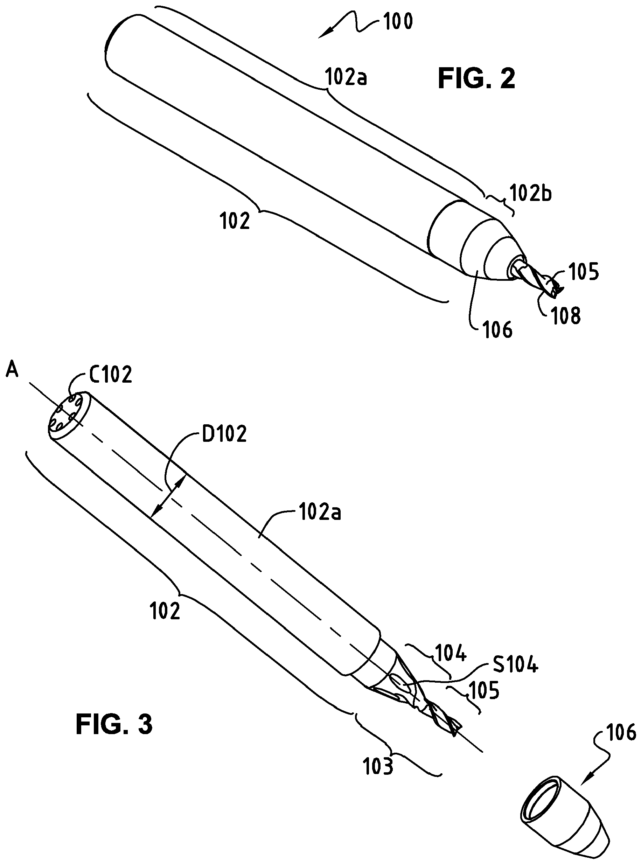

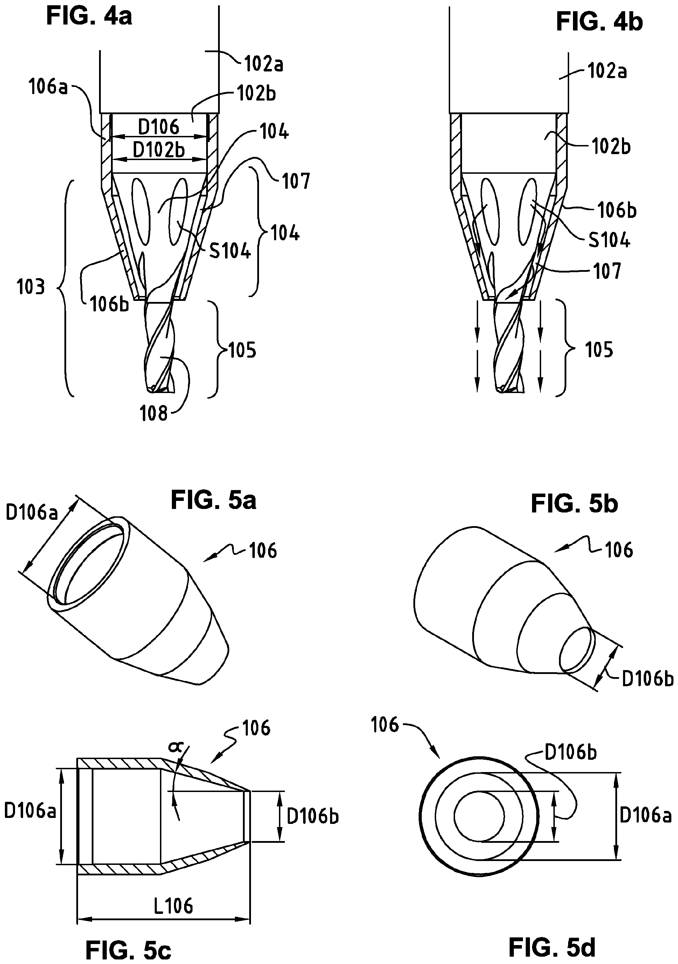

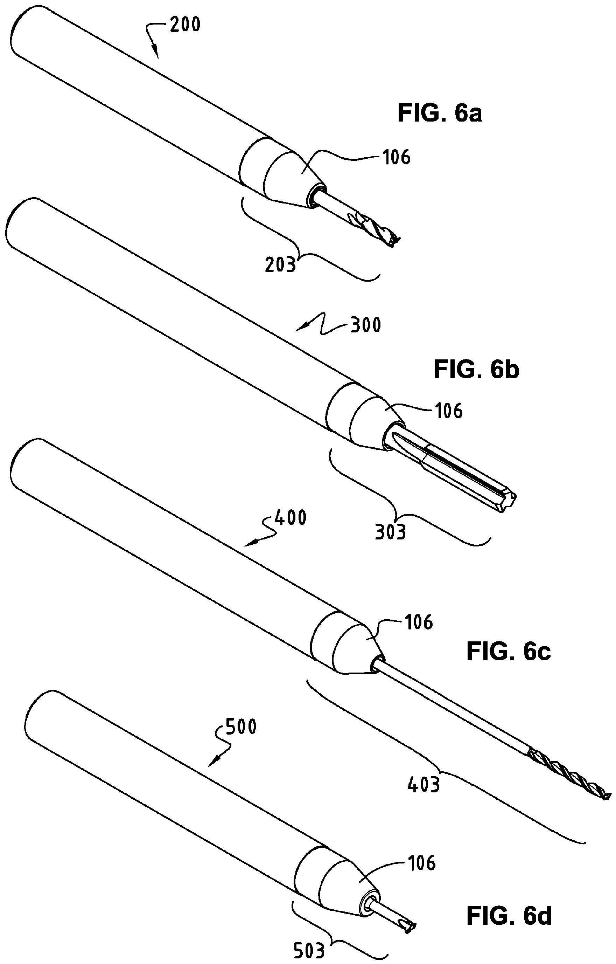

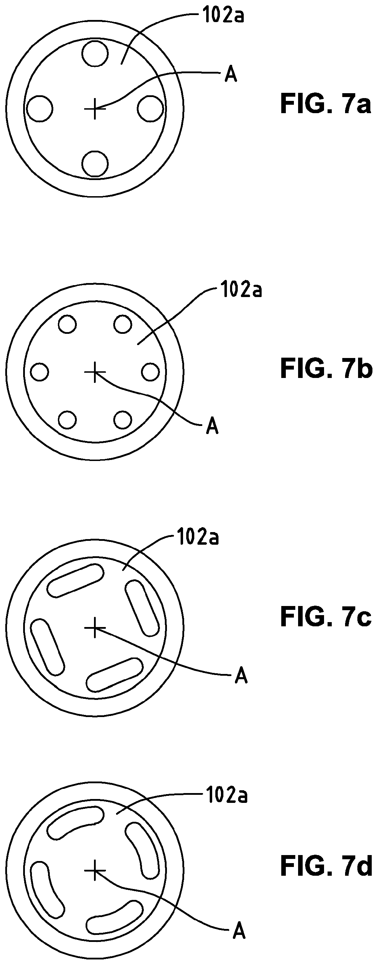

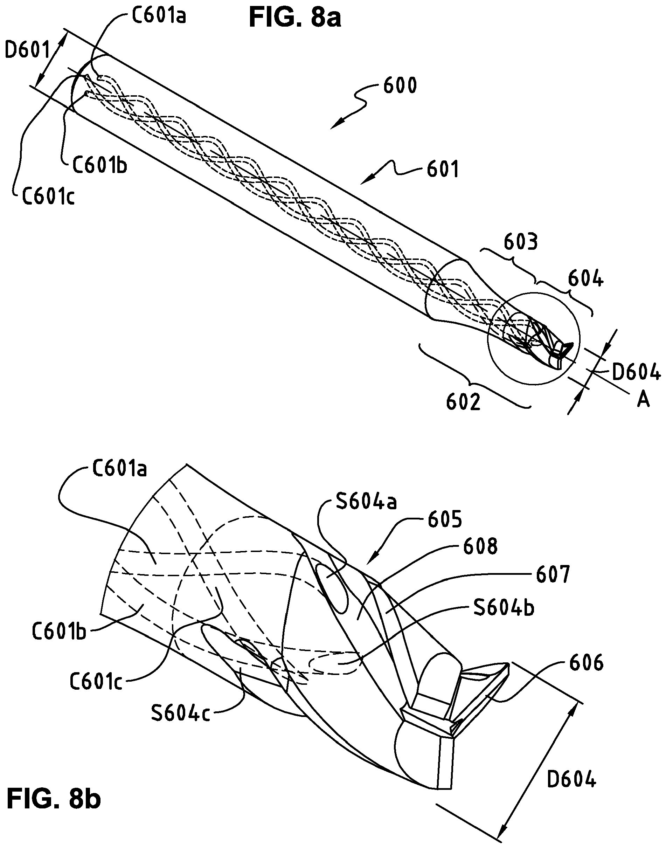

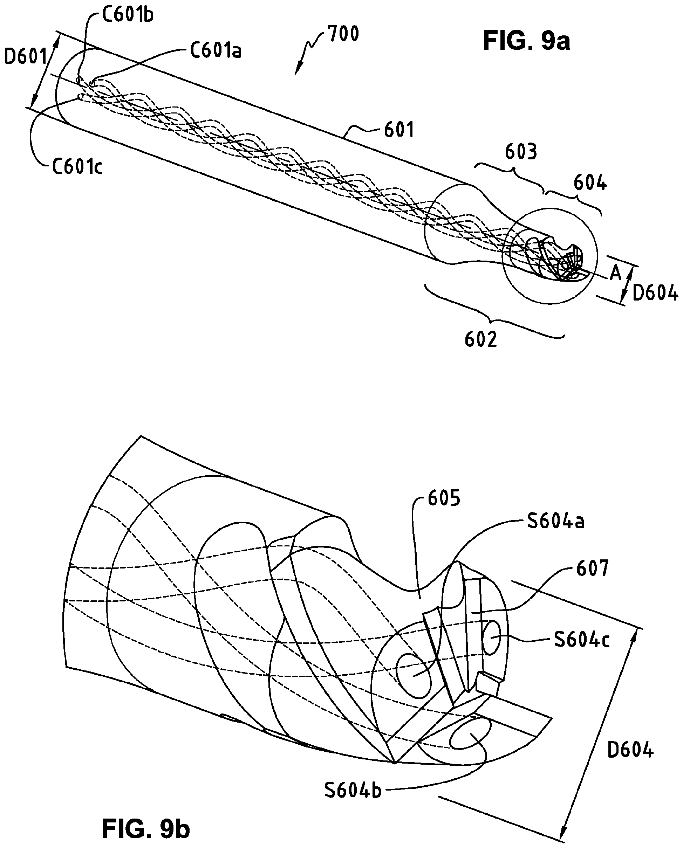

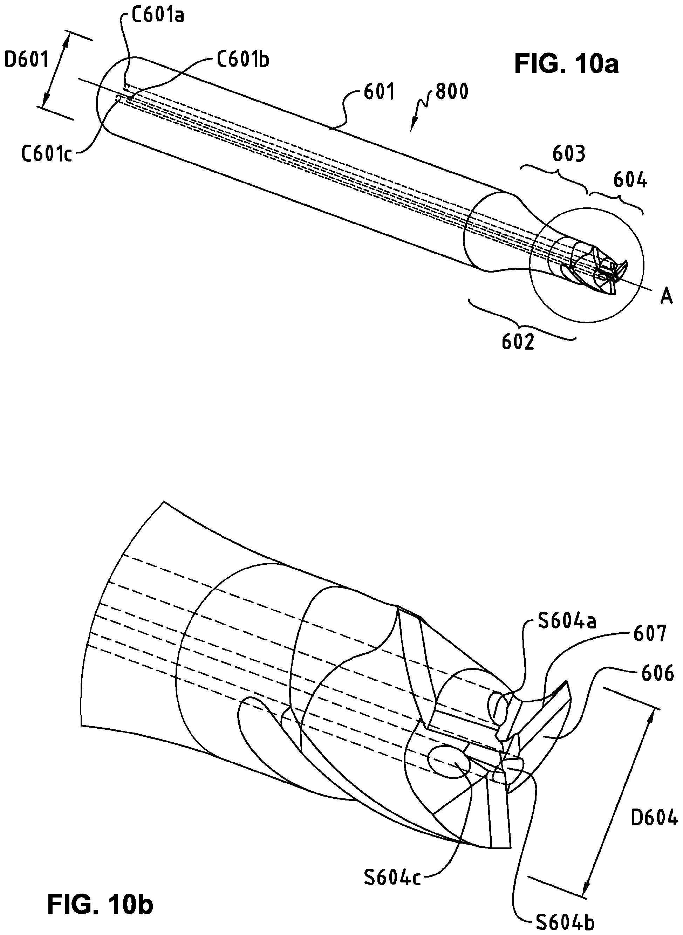

Les particularités et les avantages de la présente invention apparaîtront avec plus de détails dans le cadre de la description qui suit avec des exemples de réalisation donnés à titre illustratif et non limitatifs en référence aux dessins ci-annexés qui représentent :
▪ La figure 1a représente une vue en perspective d'un outil de coupe à lubrification intégrée connu de l'art antérieur ;
▪ La figure 1b représente une vue de face d'un outil de coupe à lubrification intégrée connu de l'art antérieur ;
▪ La figure 2 représente une vue en perspective d'un outil de coupe selon un premier mode de réalisation du premier aspect de la présente invention ;
▪ La figure 3 représente une vue en perspective d'un outil de coupe selon un premier mode de réalisation du premier aspect de la présente invention dans lequelle la bague d'arrosage directionnelle a été séparée du corps d'outil ;
▪ La figure 4a représente une vue détaillée de face et en coupe partielle d'un outil de coupe selon un premier de réalisation du premier aspect de la présente invention ;
▪ La figure 4b représente une vue détaillée de face et en coupe partielle d'un outil de coupe selon un premier de réalisation du premier aspect de la présente invention dans lequel le flux du lubrifiant est schématisé ;
▪ La figure 5a représente une première vue en perspective d'une bague d'arrosage directionnelle ;
▪ La figure 5b représente une deuxième vue en perspective d'une bague d'arrosage directionnelle ;
▪ La figure 5c représente une vue de face et en coupe d'une bague d'arrosage directionnelle ;
▪ La figure 5d représente une vue arrière d'une bague d'arrosage directionnelle ;
▪ La figure 6a représente une vue en perspective d'un outil de coupe selon un deuxième mode de réalisation du premier aspect de la présente invention ;
▪ La figure 6b représente une vue en perspective d'un outil de coupe selon un troisième mode de réalisation du premier aspect de la présente invention ;
▪ La figure 6c représente une vue en perspective d'un outil de coupe selon un quatrième mode de réalisation du premier aspect de la présente invention ;
▪ La figure 6d représente une vue en perspective d'un outil de coupe selon un cinquième mode de réalisation du premier aspect de la présente invention ;
▪ La figure 7a présente une vue de derrière d'un outil selon le premier aspect de la présente invention comprenant quatre canaux de lubrifications ;
▪ La figure 7b présente une vue de derrière d'un outil selon le premier aspect de la présente invention comprenant six canaux de lubrifications à section d'entrée circulaire ;
▪ La figure 7c présente une vue de derrière d'un outil selon le premier aspect de la présente invention comprenant des canaux à section d'entrée oblongue ;
▪ La figure 7d présente une vue de derrière d'un outil selon le premier aspect de la présente invention comprenant des canaux à section d'entrée oblongue courbée ;
▪ La figure 8a représente une vue en perspective d'un outil de coupe à lubrification intégrée ne faisant pas partie de la présente invention ;
▪ La figure 8b représente une vue détaillée de la partie coupante de l'outil de coupe de la figure 8a ;
▪ La figure 9a représente une vue en perspective d'un outil de coupe à lubrification intégrée ne faisant pas partie de la présente invention ;
▪ La figure 9b représente une vue détaillée de la partie coupante de l'outil de coupe de la figure 9a ;
▪ La figure 10a représente une vue en perspective d'un outil de coupe à lubrification intégrée ne faisant pas partie de la présente invention ; et
▪ La figure 10b représente une vue détaillée de la partie coupante de l'outil de coupe de la figure 10a.

### Description détaillée

Les figures 1a et 1b présentent un outil de fraisage 1 à lubrification intégrée connu de l'art antérieur. L'outil de fraisage 1 comporte un corps d'outil 2, une partie coupante 3 et entre le corps d'outil 2 et la partie coupante 3 une partie intermédiaire 4. La lubrification intégrée est garantie par l'intermédiaire de canaux de lubrification C qui se terminent par des sorties de lubrifications S. Comme on peut le voir, dans les figures 1a et 1b, les sorties de lubrifications S sont placées avant la partie coupante 3. Bien que ces outils améliorent la lubrification de la partie coupante 3 par rapport à un arrosage externe, le lubrifiant sortant des sorties de lubrifications S n'est que partiellement dirigé vers les arrêtes 6 de la partie coupante 3. L'effet du lubrifiant n'est dès lors que partiel et insuffisant.

Les figures 2 et 3 présentent un outil de coupe 100 à lubrification intégrée selon un premier mode de réalisation du premier aspect de la présente invention. La figure 2 présente l'outil 100 dans sa configuration « assemblée » et prêt à l'utilisation. La figure 3 quant à elle présente l'outil 100 dans sa configuration « désassemblée ». Comme on peut le comprendre à partir des figures 2 et 3, l'outil de coupe 100 à lubrification intégrée comporte un corps d'outil 102, composé d'une partie de serrage 102a avec un diamètre de serrage D102 et d'une zone de connexion de bague 102b sur laquelle vient se fixer la bague d'arrosage directionnelle 106. Le corps d'outil 102 comprend des canaux de lubrifications C102 qui s'étendent à travers le corps d'outil 102, avantageusement parallèlement à ou en spirale autour de l'axe central A, et qui débouchent dans les trous d'arrosage S104. Les trous d'arrosage S104 se situent dans la zone d'arrosage 104 de la tête d'outil 103. La tête d'outil comprend adjacente à la zone d'arrosage une partie coupante 105avec des arrêtes coupantes 108 qui permettent l'usinage d'une pièce mécanique. Comme on peut le comprendre de la figure 3, la bague d'arrosage directionnelle 106 est conçue de telle façon qu'elle puisse être montée et démontée de du corps d'outil 102.

L'utilité de la bague d'arrosage directionnelle 106 va maintenant être illustrée grâce aux figures 4a et 4b qui montrent des vue détaillées de l'outil de coupe 100 dans la région de la tête d'outil 103. Dans ces figures, la bague d'arrosage directionnelle 106 est présentée en coupe afin d'exposer les trous de d'arrosage S104. La bague d'arrosage directionnelle 106 se compose de deux parties, une partie cylindrique 106a et une partie conique 106b. La partie cylindrique possède un diamètre interne D106a qui correspond au diamètre D102b de la zone de connexion de bague 102b du corps d'outil 102. De cette façon, la partie cylindrique 106a et la zone de connexion de bague 102b forment une connexion essentiellement étanche ce qui permet de s'assurer que le lubrifiant émanant des sorties d'arrosage S104 ne puisse que très difficilement s'échapper en direction du corps d'outil 102. Le lubrifiant est ainsi dirigé en direction de la partie coupante 105. De plus, comme on peut le voir dans les figures 4a et 4b, la partie conique 106b de la bague d'arrosage directionnelle 106 est conçue de telle façon qu'elle délimite avec la zone d'arrosage 104 un espace de répartition 107. Dû aux formes coniques de la zone d'arrosage 104 et de la partie conique 106b de la bague d'arrosage directionnelle 106, la section de l'espace de répartition 107 se réduit en direction de la partie coupante 105. A débit de lubrifiant constant, le lubrifiant est, à cause de l'effet Venturi, accéléré dans l'espace de répartition 107 en direction de la partie coupante 105.

Ainsi, lors de l'utilisation de l'outil 100, le lubrifiant traverse l'outil en deux étapes. Premièrement, il traverse les canaux C102 du corps d'outil 102 et abouti dans les trous d'arrosage S104. Puis, il traverse l'espace de répartition 107 entre la bague d'arrosage directionnelle 106 et la zone d'arrosage 104 pour ensuite déboucher à l'extrémité de la bague d'arrosage directionnelle 106 à l'intérieur des goujures et au plus près des tranchants 108 de l'outil, comme schématisé par les flèches dans la figure 4b. Grâce à la bague d'arrosage directionnelle 106, il est donc possible d'atteindre une lubrification directement sur les tranchants 108 de l'outil par les goujures. La forme de préférence circulaire de la sortie de la bague d'arrosage directionnelle 106 crée un anneau de lubrification complet permettant d'atteindre l'ensemble des tranchants 108 de l'outil au plus près de la partie active et au même moment. De plus, à débit de lubrifiant constant, grâce à la bague d'arrosage directionnelle 107 et sur la base du principe de l'effet Venturi, la vitesse de sortie du lubrifiant est augmentée. La vitesse augmentée du lubrifiant favorise l'évacuation de la zone de coupe de manière continue, efficace et répétitive. La problématique de recoupe des copeaux coincés créant des états de surface médiocres, fréquents avec les procédés de lubrification externes, est supprimée. D'autres part, le lubrifiant atténue aussi la formation d'arêtes rapportées et contribue à un meilleur état de surface de la pièce produite. De manière générale, la durée de vie de l'outil de coupe 100 s'en trouve augmentée.

Les figures 5a à 5d présentent différentes vues d'une bague d'arrosage directionnelle 106. Il est important de noter que les dimensions et la forme exacte de la bague directionnelle 106 peuvent être adaptées au corps d'outil 102 spécifique sur laquelle cette bague doit être fixée et à l'utilisation de l'outil de coupe 100. Par exemple, le diamètre D106a est choisi de telle façon qu'il corresponde au diamètre D102b de la zone connexion de bague 102b. De manière plus importante, la longueur L106, le diamètre de sortie D106b ainsi que l'angle d'ouverture α de la partie conique 160b de la bague 106 peuvent être adaptés à la forme et au type de la tête d'outil 103 ainsi qu'à l'utilisation de l'outil 100. Un avantage de l'outil 100 selon la présente invention se situe donc dans le fait que la bague directionnelle 106 peut être, comme illustré dans la figure 3, échangée pour satisfaire à l'utilisation de l'outil 100.

En outre, la présente invention n'est pas limitée aux outils comprenant une tête d'outil 103 sous forme de tête de fraisage telle que présenté dans les figures 1 à 4 mais elle concerne tout type d'outil de coupe. La figure 6a illustre un outil de coupe 200 selon un deuxième mode de réalisation du premier aspect de la présente invention, dans lequel la tête coupe 203 de l'outil 200 comprend une fraise à deux tailles et à trois dents avec une partie cylindrique à l'arrière. La figure 6b présente un outil de coupe 300 selon un troisième mode de réalisation du premier aspect de la présente invention dans lequel la tête de coupe 303 est un alésoir pour trous passant. Figure 6c présente un outil de coupe 400 selon un quatrième mode de réalisation du premier aspect de la présente invention dans lequel la tête de coupe 403 est un foret de perçage profond. La figure 6d présente un outil de coupe 500 selon un cinquième mode de réalisation du premier aspect de la présente invention dans lequel la tête de coupe 503 est un tourbillonneur. Dans tous ces modes de réalisation, la bague d'arrosage directionnelle 106 permet d'atteindre une lubrification améliorée par rapport aux outils similaires qui ne voudraient pas comprendre une telle bague.

Afin d'atteindre l'effet lubrifiant désiré pour l'application spécifique dans laquelle les outils 100, 200, 300, 400, 500 sont utilisés, la forme et le nombre des canaux de lubrification C102 peuvent être différents. La figure 7a présente un outil selon le premier aspect de la présente invention comprenant quatre canaux de lubrifications C102 avec une section d'entrée circulaire. La figure 7b illustre un outil comprenant six canaux de lubrifications C102 à section d'entrée circulaire. La figure 7c présente un outil ayant des canaux de lubrifications C102 à section d'entrée oblongue. La figure 7d présente quant à elle un outil ayant des canaux de lubrifications C102 à section d'entrée oblongue courbée. Bien entendu, un homme du métier comprendra sans peine que d'autres formes de sections d'entrée ainsi qu'un nombre différent de canaux de lubrifications C102 est possible dans le cadre de la présente invention. Il est bien entendu aussi possible de combiner des canaux de lubrifications possédant des sections d'entrées de formes différentes. Dans les figures 7a à 7d les sections d'entrées des canaux de lubrifications C102 sont placées à équidistance de l'axe central A et sont réparties autour de l'axe central A. Un homme du métier comprendra bien évidemment que dans le cadre de la présente invention une autre répartition des sections d'entrées des canaux de lubrifications C102 est tout à fait possible. De plus, comme mentionné ci-dessus, les canaux de lubrifications C102 s'étendent à travers le corps d'outil 102 préférablement parallèlement à l'axe central A ou en spirale autour de cet axe. Bien entendu les canaux C102 peuvent s'étendre d'une façon différente à travers le corps d'outil 102.

La figure 8a présente un outil de coupe 600 à lubrification intégrée. L'outil de coupe 600 comporte un corps d'outil 601 avec un diamètre de serrage D601 ainsi qu'une tête d'outil 602. La tête d'outil 602 comporte une partie coupante 604, avec un diamètre de coupe D604, qui est reliée à au corps d'outil 601 par une partie intermédiaire 603. Comme on peut le voir, la partie intermédiaire 603 a essentiellement une forme de cône tronqué ce qui permet de réduire le diamètre de l'outil en direction de la partie coupante 604 du diamètre de serrage D601 vers le diamètre de coupe D604.

L'outil comprend de plus un premier canal de lubrification C601a, un deuxième canal de lubrification C601b ainsi qu'un troisième canal de lubrification C601c qui s'étendent à travers le corps d'outil 601 jusque dans la tête d'outil 602. Le premier canal de lubrification C601a débouche dans un premier trou d'arrosage S604a, le deuxième canal de lubrification C601b dans un deuxième trou d'arrosage S604b et le troisième canal de lubrification C601c dans un troisième trou d'arrosage S604c.

Comme on peut le voir dans la figure 8a, les canaux de lubrification C601a, C601b, C601c s'étendent en spirale autour de l'axe central A du corps d'outil. Avantageusement, l'hélicité de cette spirale correspond à l'hélicité des goujures 605 de la partie coupante 604. De plus, il est avantageux si le pas de la spirale correspond au pas de la spirale formée par les goujures 605.

Comme illustré dans la figure 8b, qui est une vue en détail de la partie coupante 604 de l'outil 600 présenté dans la figure 8a, les trous d'arrosage S604a, S604b, S604c se situent chacun à l'intérieur d'une rainure spécifique 608 prévue au fond des goujures 605 de la partie coupante 604. L'hélicité, le pas ainsi que le diamètre de la spirale des canaux de lubrification sont avantageusement choisis de telle sorte que les goujures 105 représentent la prolongation des canaux de lubrification C601a, C601b, C601c. Ceci est particulièrement avantageux, car la section des trous d'arrosages S601a, S601b, S601c sont ainsi orientées de telle sorte que le lubrifiant sortant de ces trous est dirigé de manière optimale dans les goujures 605 et le long des tranchants 607. De manière avantageuse, les trous d'arrosage sont placés dans les goujures au plus près de la partie intermédiaire 603. Cela permet d'assurer une lubrification optimale le long de toute la partie coupante 604. Ceci est particulièrement favorable lorsque l'outil de coupe est une tête de fraisage.

Les figures 9a et 9b présentent un outil de coupe 700 à lubrification intégrée alternatif à l'outil précédent de la figure 8. L'outil 700 est similaire à l'outil 600 sauf pour la position des trous d'arrosage S604a, S604b, S604c qui sont, dans ce deuxième mode de réalisation, situés dans les faces de coupe frontale 606 de la partie coupante 604. Dans l'outil 700, l'hélicité, le pas ainsi que le diamètre de la spirale des canaux de lubrification sont choisis avantageusement de telle sorte, que les canaux de lubrification C601a, C601b, C601c débouchent perpendiculairement aux faces de coupe frontale 606, comme illustré dans la figure 9b. Le lubrifiant est ainsi dirigé en sortant des trous d'arrosage dans la direction la plus avantageuse. En effet, le lubrifiant est ainsi dirigé en direction des tranchants des faces de coupe frontale opposées ce qui permet une lubrification optimale de ces tranchants lors des opérations de surfaçage ainsi que pour les usinages de poches profondes.

Les figures 10a et 10b présentent un outil de coupe 800 à lubrification intégrée alternatif aux deux précédents outils des figures 8 et 9. Contrairement aux outils 600 et 700, l'outil 800 comprend des canaux de lubrification C601a, C601b, C601c qui s'étendent dans le corps d'outil 601 de manière essentiellement parallèle à l'axe central A. La distance entre l'axe central A et les canaux de lubrification est choisie avantageusement de telle sorte que les trous d'arrosage S604a, S604b, S604c se situent entre la coupe au diamètre et la coupe frontale. Plus particulièrement, le premier trou d'arrosage S604a se situe proche d'une face de coupe au diamètre de la partie coupante 604 et le deuxième trou d'arrosage S604b se situe proche d'une autre face de coupe au diamètre de la partie coupante 604.

Ceci est particulièrement avantageux car les tranchants de la coupe frontale et les tranchants de la coupe au diamètre sont lubrifiés. Ceci est particulièrement avantageux pour les outils qui sont utilisés aussi bien en mode perçage qu'en mode fraisage. De plus le fait de prévoir les canaux de lubrification parallèles à l'axe central permet de fournir des outils dont la fabrication est plus facile par rapport aux outils 600 et 700 mais permettant quand même une lubrification suffisante.

Il est important de noter que dans les outils 600, 700, 800, les entrées des canaux sur la face arrière du corps d'outil peuvent par exemple prendre les formes illustrées dans les figures 7a à 7d. Les entrées des canaux peuvent en particuliers avoir une forme circulaire, oblongue ou oblongue courbée. De plus, le nombre de canaux prévus à travers le corps d'outil peut être différent de trois. Un mode de réalisation à six canaux comme illustré dans la figure 7b est également possible.

## Revendications

1. Outil de coupe (100, 200, 300, 400, 500) pour l'usinage de pièces mécaniques, comprenant un corps d'outil (102) avec un axe central (A) et un diamètre de serrage (D102), une tête d'outil (103) adjacente au corps d'outil (102) en direction de l'axe central (A) et composée d'une zone d'arrosage (104) et d'une partie coupante (105) ayant un diamètre de coupe (D105) inférieur au diamètre de serrage (D102), l'outil de coupe (100) comprenant aussi au moins un canal de lubrification (C102) qui s'étend à travers le corps d'outil (102) et qui débouche dans un trou d'arrosage (S104) situé dans la zone d'arrosage (104),
l'outil de coupe (100, 200, 300, 400, 500) comprenant une bague d'arrosage directionnelle (106) prévue pour se fixer sur une zone de connexion de bague (102b) du corps d'outil (102), la zone de connexion de bague (102b) étant adjacente à la zone d'arrosage (104), et la bague d'arrosage directionnelle (106) étant configurée de telle façon qu'elle délimite avec au moins une partie de la zone d'arrosage (104) un espace de répartition (107),
**caractérisé en ce que** la section de l'espace de répartition (107) se réduise en direction de la partie coupante (105).

2. Outil de coupe (100, 200, 300, 400, 500) selon la revendication 1, dans lequel la bague d'arrosage directionnelle (106) couvre partiellement la partie coupante (105)

3. Outil de coupe (100, 200, 300, 400 ,500) selon une des revendications 1 ou 2, dans lequel le corps d'outil comprend 2, 3, 4, 5, 6, 8 ou 10 canaux de lubrifications (C102).

4. Outil de coupe (100, 200, 300, 400, 500) selon une des revendications précédentes, dans lequel les canaux de lubrifications (C102) s'étendent à travers le corps d'outil (102) parallèlement à l'axe central (A).

5. Outil de coupe (100, 200, 300, 400, 500) selon une des revendications 1à 3, dans lequel les canaux de lubrifications (C102) s'étendent à travers le corps d'outil (102) en spirale autour de l'axe central (A).

6. Outil de coupe (100, 200, 300, 400, 500) selon une des revendications précédentes, dans lequel la bague d'arrosage directionnelle (106) est amovible.

7. Outil de coupe (100, 200, 300, 400, 500) selon une des revendications précédentes, dans lequel la tête d'outil (103) est une tête de fraisage à deux tailles, une coupe frontale et coupe au diamètre possédant de une à dix dents coupantes.

8. Outil de coupe (100, 200, 300, 400, 500) selon une des revendications précédentes, dans lequel la tête d'outil (103) est un tourbillonneur, une fraise à fileter, un foret, ou un alésoir.

9. Outil de coupe (100, 200, 300, 400, 500) selon une des revendications précédentes, dans lequel le diamètre de coupe (D105) est plus petit que 6mm, avantageusement plus petit que 5mm, encore plus avantageusement plus petit que 4mm.

10. Outil de coupe (100, 200, 300, 400, 500) selon une des revendications précédentes, dans lequel la tête d'outil (103) et le corps d'outil (102) sont en carbure de tungstène.

11. Outil de coupe (100, 200, 300, 400, 500) selon une des revendications précédentes, dans lequel la bague d'arrosage directionnelle (106) est en carbure de tungstène, en métal ou en matière synthétique.

12. Outil de coupe (100, 200, 300, 400, 500) selon les revendications précédentes, dans lequel la bague directionnelle (106) est fixée sur le corps d'outil (102) par un ajustement avec serrage, par un filetage, par un ajustement serré avec poinçonnage ou par collage.

## Patentansprüche

1. Schneidwerkzeug (100, 200, 300, 400, 500) zum Bearbeiten mechanischer Teile, umfassend einen Werkzeugkörper (102) mit einer zentralen Achse (A) und einem Spanndurchmesser (0102), einen in der Richtung der zentralen Achse (A) an dem Werkzeugkörper (102) angrenzenden Werkzeugkopf (103),enthaltend einen Sprinklerbereich (104) und einen Schneidbereich (105), der einen Schneiddurchmesser (0105) aufweist, welcher kleiner ist als der Spanndurchmesser (D102), wobei das Schneidwerkzeug (100) auch mindestens ein Schmierkanal (C102) aufweist, der sich durch den Werkzeugkörper (102) erstreckt und in einer Sprinkleröffnung (S104) mündet, welche sich in dem Sprinklerbereich (104) befindet,
wobei das Schneidwerkzeug (100, 200, 300, 400, 500) einen gerichteten Sprinklerring (106) umfasst, welcher zum Befestigen an einem Ringverbindungsbereich (102b) des Werkzeugkörpers (102) vorgesehen ist, wobei der Ringverbindungsbereich (102b) an den Sprinklerbereich (104) angrenzt und der gerichtete Sprinklerring (106) eingerichtet ist, dass er einen Verteilungsraum (107) mit zumindest einem Teil des Sprinklerbereichs (104) begrenzt,
**dadurch gekennzeichnet, dass** der Querschnitt des Verteilungsraums (107) in der Richtung des Schneidabschnitts (105) reduziert ist.

2. Schneidwerkzeug (100, 200, 300, 400, 500) nach Anspruch 1, wobei der gerichtete Sprinklerring (106) teilweise den Schneidbereich (105) überdeckt.

3. Schneidwerkzeug (100, 200, 300, 400, 500) nach einem der Ansprüche 1 oder 2, wobei der Werkzeugkörper (102) 2, 3, 4, 5, 6, 8 oder 10 Schmierkanäle (C102) umfasst.

4. Schneidwerkzeug (100, 200, 300, 400, 500) nach einem der Ansprüche 1 bis 3, wobei die Schmierkanäle (C102) den Werkzeugkörper (102) derart durchdringen, dass sie parallel zu der zentralen Achse (A) verlaufen.

5. Schneidwerkzeug (100, 200, 300, 400, 500) nach einem der Ansprüche 1 bis 3, wobei die Schmierkanäle (C102) den Werkzeugkörper (102) derart durchdringen, dass sie in einer Spirale um die zentrale Achse (A) verlaufen.

6. Schneidwerkzeug (100, 200, 300, 400, 500) nach einem der vorhergehenden Ansprüche, wobei der gerichtete Sprinklerring (106) entfernbar ist.

7. Schneidwerkzeug (100, 200, 300, 400, 500) nach einem der vorhergehenden Ansprüche, wobei der Werkzeugkopf (103) ein Fräskopf mit zwei Grössen, einem Stirnschnitt und einem Durchmesserschnitt, mit einem bis zehn Schneidzähnen ist.

8. Schneidwerkzeug (100, 200, 300, 400, 500) nach einem der vorhergehenden Ansprüche, wobei der Werkzeugkopf (103) ein Gewindewirbler, ein Gewindeschneider, ein Bohrer oder ein Reibwerkzeug ist.

9. Schneidwerkzeug (100, 200, 300, 400, 500) nach einem der vorhergehenden Ansprüche, wobei der Schneiddurchmesser (D105) kleiner als 6 mm, vorzugsweise kleiner als 5 mm, besonders bevorzugt kleiner als 4 mm, ist.

10. Schneidwerkzeug (100, 200, 300, 400, 500) nach einem der vorhergehenden Ansprüche, wobei der Werkzeugkopf (103) und der Werkzeugkörper (102) aus Wolframkarbid fertigbar sind.

11. Schneidwerkzeug (100, 200, 300, 400, 500) nach einem der vorhergehenden Ansprüche, wobei der gerichtete Sprinklerring (106) aus Wolframkarbid, Metall oder Kunststoff fertigbar ist.

12. Schneidwerkzeug (100, 200, 300, 400, 500) nach einem der vorhergehenden Ansprüche, wobei der gerichtete Sprinklerring (106) an dem Werkzeugkörper (102) mittels einer Presspassung, mittels eines Gewindes, mittels einer Presspassung mit Stanzen oder Kleben befestigt ist.

## Claims

1. Cutting tool (100, 200, 300, 400, 500) for machining mechanical parts, comprising a tool body (102) with a central axis (A) and a gripping diameter (D102), a tool head (103) adjacent to the tool body (102) in the direction of the central axis (A) and composed of a sprinkling region (104) and a cutting portion (105) having a cutting diameter (D105) which is smaller than the gripping diameter (D102), the cutting tool (100) also comprising at least one lubrication duct (C102) which extends through the tool body (102) and which opens into a sprinkling hole (S104) located in the sprinkling region (104),
the cutting tool (100, 200, 300, 400, 500) comprising a directional sprinkling ring (106) that is provided for attachment to a ring connection region (102b) of the tool body (102), the ring connection region (102b) being adjacent to the sprinkling region (104), and the directional sprinkling ring (106) being configured in such a way that it delimits, with at least one portion of the sprinkling region (104), a distribution space (107),
**characterized in that** the cross section of the distribution space (107) is reduced in the direction of the cutting portion (105).

2. Cutting tool (100, 200, 300, 400, 500) according to the claim 1, wherein the directional sprinkling ring (106) partially covers the cutting portion (105).

3. Cutting tool (100, 200, 300, 400, 500) according to one of the claims 1 or 2, wherein the tool body (102) comprises 2, 3, 4, 5, 6, 8 or 10 lubrication ducts (C102).

4. Cutting tool (100, 200, 300, 400, 500) according to one of the claims 1 to 3, wherein the lubrication ducts (C102) extend through the tool body (102) in parallel with the central axis (A).

5. Cutting tool (100, 200, 300, 400, 500) according to one of the claims 1 to 3, wherein the lubrication ducts (C102) extend through the tool body (102) in a spiral around the central axis (A).

6. Cutting tool (100, 200, 300, 400, 500) according to one of the preceding claims, wherein the directional sprinkling ring (106) is removable.

7. Cutting tool (100, 200, 300, 400, 500) according to one of the preceding claims, wherein the tool head (103) is a two size milling head, a front cut and diameter cut having one to ten cutting teeth.

8. Cutting tool (100, 200, 300, 400, 500) according to one of the preceding claims, wherein the tool head (103) is a thread whirler, a thread milling cutter, a drill, or a reamer.

9. Cutting tool (100, 200, 300, 400, 500) according to one of the preceding claims, wherein the cutting diameter (D105) is smaller than 6 mm, preferably smaller than 5 mm, even more preferably smaller than 4 mm.

10. Cutting tool (100, 200, 300, 400, 500) according to one of the preceding claims, wherein the tool head (103) and the tool body (102) are made of tungsten carbide.

11. Cutting tool (100, 200, 300, 400, 500) according to the preceding claims, wherein the directional sprinkling ring (106) is made of tungsten carbide, of metal or of synthetic material.

12. Cutting tool (100, 200, 300, 400, 500) according to the preceding claims, wherein the directional ring (106) is fixed on the tool body (102) by a press fit, by a thread, by a press fit with punching or by gluing.
